# EUROPEAN PATENT APPLICATION

(11) **EP 1 881 363 A1**
(43) Date of publication of application: **23.01.2008**
(21) Application number: 07012432.6
(22) Date of filing: 26.06.2007
(51) Int. Cl.: G02F 1/13357, G02B 5/02

(54) **Diffusion plate assembly for backlight**

(30) Priority: 18.07.2006 KR 20060066953
(71) Applicant: Samsung Electronics Co., Ltd., Yeongtong-gu Suwon-city, Gyeonggi-do 442-742 (KR)
(72) Inventor: Cho, Jin-Ho, Chungcheongnam-do (KR); Lee, Chul-Woo, Chungcheongnam-do (KR); Choi, Yong-Seok, Gyeonggi-do (KR)
(74) Representative: Dr. Weitzel & Partner

(57) **Abstract**

Disclosed are seven assemblies (130;130a;130b;130c;130';133";130"') which provide thermal insulation. In each assembly spacers (133) form an air layer between the diffusing layer (131) and a transparent plate (132) to block heat transfer to a diffusion layer. The layer and the plate may be connected to the spacers by using either an adhesion layer or heat-pressing. The spacers (138,139a) and the plate (132') may form a single unit. The principal use of the assemblies is in an LCD backlight (100). Such a backlight may include a non-integral mold (163) which is disposed at two opposing sides of a bottom chassis (160) to support the diffusing layer (131).

## Description

### BACKGROUND OF THE INVENTION

### 1. Field of the Invention

The present invention relates to a diffusion plate assembly and a backlight assembly, and more particularly, to a diffusion plate assembly having light diffusion and heat blocking effects and a backlight assembly including the diffusion plate assembly.

### 2. Description of the Related Art

A liquid crystal display ("LCD") is one of the most widely used flat panel displays. The LCD includes two substrates having a plurality of electrodes and a liquid crystal layer interposed therebetween and adjusts the amount of light transmitted therethrough by applying a voltage to the electrodes to rearrange liquid crystal molecules in the liquid crystal layer.

As modem society changes into an information-oriented society, demand has increased for liquid crystal displays that are both large and slim. Thus, there has been an increasing demand for ultra-large scale (40-inch or more) liquid crystal displays such as public information displays ("PIDs") used in outdoor advertisements.

As the demand for ultra-large scale liquid crystal displays such as PIDs grows, the sizes of backlight assemblies disposed at the rear surfaces of large-screen liquid crystal panels to supply light to the liquid crystal panels are also increasing. Thus, diffusion plates constituting backlight assemblies become larger in size, thereby resulting in sagging of center portions of the diffusion plates.

Therefore, it is necessary to prevent the sagging of the center portions of diffusion plates, and at the same time, the entrance of external heat into the diffusion plates.

### BRIEF SUMMARY OF THE INVENTION

An exemplary embodiment provides a backlight assembly having light diffusion and heat blocking effects and preventing the sagging of a diffusion plate.
An exemplary embodiment provides a diffusion plate assembly constituting the backlight assembly.

In an exemplary embodiment, there is provided a backlight assembly including a lower mold including a diffusion plate assembly support arm, a diffusion plate assembly disposed on the diffusion plate assembly support arm, a lamp disposed below the diffusion plate assembly and a bottom chassis receiving the lower mold, the diffusion plate assembly and the lamp. The diffusion plate assembly includes a first plate diffusing light, a second plate disposed to face a lower surface of the first plate and blocking heat transfer toward the first plate, and a spacer interposed between the first plate and the second plate and separating the first plate and the second plate;
In an exemplary embodiment, there is provided a diffusion plate assembly including a first plate diffusing light, a second plate disposed to face a surface of the first plate and blocking heat transfer toward the first plate and a spacer interposed between the first plate and the second plate and separating the first plate and the second plate.

### BRIEF DESCRIPTION OF THE DRAWINGS

The above and other features and advantages of the present invention will become more apparent by describing in detail exemplary embodiments thereof with reference to the attached drawings in which:
FIG. 1 is an exploded perspective view illustrating an exemplary embodiment of a backlight assembly according to the present invention;
FIG. 2 is a perspective view illustrating an exemplary embodiment of a supporter according to the present invention;
FIG. 3 is a perspective view illustrating an exemplary embodiment of a lower mold according to the present invention;
FIG. 4 is a cross-sectional view illustrating the backlight assembly in FIG. 1;
FIG. 5 is a perspective view illustrating an exemplary embodiment of a diffusion plate assembly according to the present invention;
FIG. 6 is a sectional view taken along line VI-VI' of FIG. 5;
FIG. 7A is an exploded perspective view of the diffusion plate assembly shown in FIG. 5;
FIGS. 7B through 7D are schematic views illustrating exemplary embodiments of different arrangements of the spacers of FIG. 7A;
FIG. 8A is an exploded perspective view illustrating a diffusion plate assembly including another exemplary embodiment of the spacers of the diffusion plate assembly shown in FIG.5;
FIGS. 8B through 8D are schematic views illustrating exemplary embodiments of different arrangements of the spacers of FIG. 8A;
FIG. 9A is an exploded perspective view illustrating a diffusion plate assembly including another exemplary embodiment of the spacers of the diffusion plate assembly shown in FIG. 5;
FIG. 9B is a schematic view illustrating an exemplary embodiment of an arrangement of the spacers of FIG. 9A;
FIG. 10A is an exploded perspective view illustrating a diffusion plate assembly including another exemplary embodiment of the spacers of the diffusion plate assembly shown in FIG. 5;
FIG. 10B is a schematic view illustrating an exemplary embodiment of an arrangement of the spacers of FIG. 10A;
FIG. 11 is a cross-sectional view illustrating another exemplary embodiment of a diffusion plate assembly according to the present invention;
FIG. 12 is an exploded perspective view illustrating the diffusion plate assembly shown in FIG. 11;
FIG. 13 is a perspective view illustrating another exemplary embodiment of a diffusion plate assembly according to the present invention;
FIG. 14 is a cross-sectional view taken along line XIV-XIV' of FIG. 13;
FIG. 15A is an exploded perspective view illustrating the diffusion plate assembly shown in FIG. 13;
FIGS. 15B through 15D are schematic views illustrating exemplary embodiments of different arrangements of the spacers of FIG. 13;
FIG. 16 is a cross-sectional view illustrating another exemplary embodiment of a diffusion plate assembly according to the present invention; and
FIG. 17 is an exploded perspective view illustrating the diffusion plate assembly shown in FIG. 16.

### DETAILED DESCRIPTION OF THE INVENTION

Advantages and features of the present invention and methods of accomplishing the same may be understood more readily by reference to the following detailed description of preferred embodiments and the accompanying drawings. The present invention may, however, be embodied in many different forms and should not be construed as being limited to the embodiments set forth herein. Rather, these embodiments are provided so that this disclosure will be thorough and complete and will fully convey the concept of the invention to those skilled in the art, and the present invention will only be defined by the appended claims. In the drawings, the size and relative sizes of layers and regions may be exaggerated for clarity.

It will be understood that when an element or layer is referred to as being "on" or "connected to" another element or layer, the element or layer can be directly on or connected to another element or layer or intervening elements or layers. In contrast, when an element is referred to as being "directly on" or "directly connected to" another element or layer, there are no intervening elements or layers present. Like numbers refer to like elements throughout. As used herein, the term "and/or" includes any and all combinations of one or more of the associated listed items.

It will be understood that, although the terms first, second, third, etc., may be used herein to describe various elements, components, regions, layers and/or sections, these elements, components, regions, layers and/or sections should not be limited by these terms. These terms are only used to distinguish one element, component, region, layer or section from another region, layer or section. Thus, a first element, component, region, layer or section discussed below could be termed a second element, component, region, layer or section without departing from the teachings of the present invention.

Spatially relative terms, such as "below", "lower", and the like, may be used herein for ease of description to describe the relationship of one element or feature to another element(s) or feature(s) as illustrated in the figures. It will be understood that the spatially relative terms are intended to encompass different orientations of the device in use or operation, in addition to the orientation depicted in the figures. For example, if the device in the figures is turned over, elements described as "below" or "lower" other elements or features would then be oriented "above" the other elements or features. Thus, the exemplary term "below" or "lower" can encompass both an orientation of above and below. The device may be otherwise oriented (rotated 90 degrees or at other orientations) and the spatially relative descriptors used herein interpreted accordingly.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Embodiments of the invention are described herein with reference to cross-section illustrations that are schematic illustrations of idealized embodiments (and intermediate structures) of the invention. As such, variations from the shapes of the illustrations as a result, for example, of manufacturing techniques and/or tolerances, are to be expected. Thus, embodiments of the invention should not be construed as limited to the particular shapes of regions illustrated herein but are to include deviations in shapes that result, for example, from manufacturing.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

The present invention will now be described more fully with reference to the accompanying drawings, in which exemplary embodiments of the invention are shown.

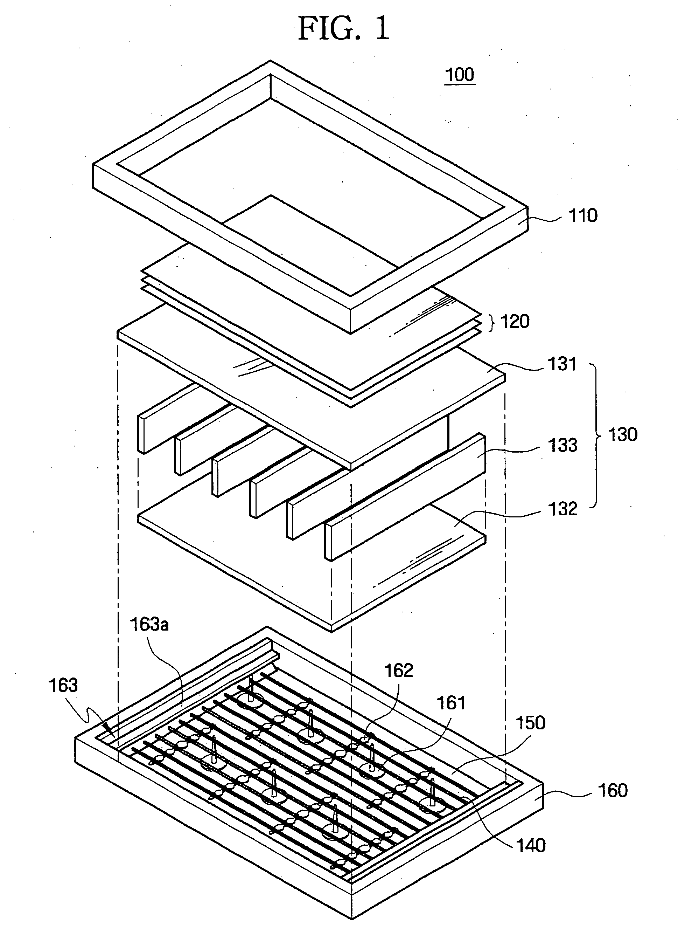

First, an exemplary embodiment of a backlight assembly according to the present invention will be described in detail with reference to FIGS. 1 through 4. Although the invention is described with regard to a backlight assembly 100 including the diffusion plate assembly according to the current embodiment by way of example, the diffusion plate assembly is not limited thereto. The backlight assembly of the present invention may include a modified example of the diffusion plate assembly shown in FIGS. 1 through 4 or a diffusion plate assembly according to other exemplary embodiments of the present invention. In addition, many different modifications are possible.

Referring to FIG. 1, the backlight assembly 100 includes a top chassis 110, an optical sheet 120, a diffusion plate assembly 130, a lamp 140, a reflective sheet 150, a bottom chassis 160, a lamp supporter 162 and a lower mold 163 including a diffusion plate assembly support arm 163a. The diffusion plate assembly 130 is placed on the diffusion plate assembly support arm 163a and includes a first plate 131 diffusing light, a second plate 132, which is disposed below the first plate 131 and blocks heat transfer toward the first plate 131, and a spacer 133. The backlight assembly 100 may further include a supporter 161 which is secured to the bottom chassis 160 and supports the second plate 132.

The top chassis 110 receives the optical sheet 120, the diffusion plate assembly 130, the lamp 140 and the reflective sheet 150, and is securely fixed to the bottom chassis 160. The top chassis 110 has sidewalls extending from edges of a bottom, which may be substantially rectangular. The top chassis 110 is structured such that a liquid crystal panel (not shown) can be supported by stepped portions or projections formed inside the sidewalls.

The optical sheet 120 is disposed below the top chassis 110 and serves to diffuse and focus light coming from the lamp 140. In an exemplary embodiment, the optical sheet 120 may include, but is not limited to, a diffusion sheet, a first prism sheet, a second prism sheet, etc.

The diffusion plate assembly 130 may be disposed below the optical sheet 120 and is comprised of the first plate 131 diffusing light, the second plate 132 blocking heat transfer toward the first plate 131 and the spacer 133 which is interposed between the first plate 131 and the second plate 132 to separate the first plate 131 and the second plate 132.

The first plate 131 of the diffusion plate assembly 130 may be placed on the diffusion plate assembly support arm 163a of the lower mold 163 as will be described later. The second plate 132 may be supported by the supporter 161 to reduce or effectively prevent a sagging phenomenon of the second plate 132. The diffusion plate assembly 130 will be described in more detail later.

The lamp 140 may be disposed below the diffusion plate assembly 130. In exemplary embodiments, the lamp 140 may include, but is not limited to an LED (Light Emitting Diode), a CCFL (Cold Cathode Fluorescent Lamp) and an EEFL (External Electrode Fluorescent Lamp). A plurality of lamps 140 may be spaced apart from each other by a predetermined distance and connected in parallel to each other in the same plane as illustrated in FIG. 1. The lamp 140 may form a direct-type lamp structure. The lamp 140 may be received in the bottom chassis 160.

The reflective sheet 150 is disposed below the lamp 140 and has a reflective surface reflecting light upward from below the lamp 140.

The bottom chassis 160 may have a substantially rectangular bottom surface. The optical sheet 120, the diffusion plate assembly 130, the lamp 140, the reflective sheet 150, the lamp supporter 162 and the lower mold 163 including the diffusion plate assembly support arm 163a are received in an area defined by sidewalls extending from edges of the bottom surface of the bottom chassis 160.

The supporter 161 supporting the second plate 132, the lamp supporter 162 supporting the lamp 140, and the lower mold 163 disposed at opposing sides of the bottom chassis 160 are disposed on the bottom of the bottom chassis 160. the lower mold 163 may be of a non-integral type or may be integrated into other elements of the backlight assembly 100.

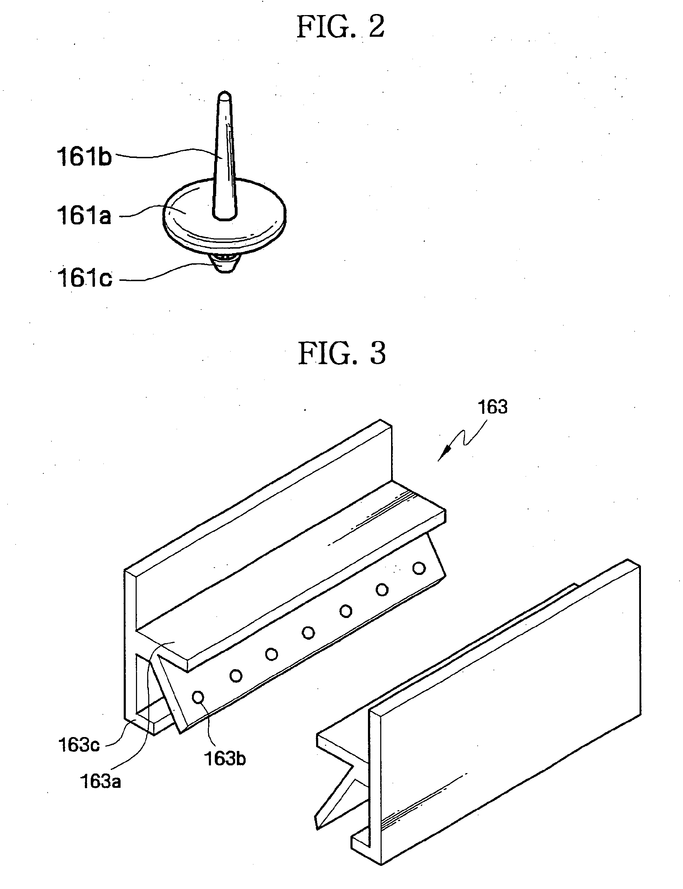

Hereinafter, the supporter 161 will be described in detail with reference to FIGS. 1 and 2. FIG. 2 is a perspective view illustrating an exemplary embodiment of a supporter according to the present invention. As shown in FIG. 1, a predetermined number of supporters 161 are disposed below the second plate 132 to support the second plate 132. The supporters 161 may be disposed to correspond substantially to a center region of the second plate 132 in such a way as to be spaced apart from each other by a predetermined distance to thereby reduce or effectively prevent sagging of the second plate 132.

Referring to FIG. 2, a supporter 161 includes a base plate 161 a, a support member 161 b, such as a rod, which extends from the base plate 161 a to be substantially perpendicular to the base plate 161a, and a fastening member 161 c which is secured to the bottom chassis (See, 160 of FIG. 1). In exemplary embodiments, the base plate 161a may be in the form of a transparent plate in order to minimize a reduction in light transmittance. The support rod 161 b may protrude from the base plate 161a in such a way as to be substantially perpendicular to the base plate 161a. The support rod 161b extends to a predetermined height from the base plate 161 a in order to reduce or effectively prevent sagging of the second plate 132. In an exemplary embodiment, the support rod 161b may be made of a transparent and flexible material, e.g., a silicone-based rubber, so that when it contacts with the second plate 132, no scratching is caused on the second plate 132, but present invention is not limited thereto. The support rod 161b may be in the shape of a cylinder, a cone, a rectilinear or curved tube and any other shape suitable for the purpose described herein. The supporter 161 is secured to a bottom chassis (See, 160 of FIG. 1) by the fastening member 161c disposed on a lower surface of the base plate 161 a. In an exemplary embodiment, the fastening member 161c may have a hook-like shape, but the present invention is not limited thereto.

Referring again to FIG. 1, the backlight assembly 100 may further include the lamp supporter 162. The lamp supporter 162 may be comprised of a lamp support plate (not shown) and a lamp fastener (not shown).

The lamp support plate has an elongated plate shape, and may be made of a transparent material.

As illustrated in FIG. 1, a plurality of lamp fasteners are present in the lamp support plate along a longitudinal direction of the lamp support plate, and the lamp 140 is secured to each lamp fastener.

In exemplary embodiments, the lamp fastener may be made of a flexible material (e.g., silicone-based rubber) with good transparency to prevent transmission loss, but the present invention is not limited thereto.

In one exemplary embodiment, the lamp fastener may have a top-opened circular profile. However, the shape of the lamp fastener is not limited so long as the lamp 140 can be insertedly received in the lamp fastener.

In an exemplary embodiment, the lamp fastener may be formed on a separate lamp support plate. In an alternative embodiment, the lamp fastener may be formed on a base plate (See, 161a of FIG. 2) of the supporter 161, together with a support rod (See, 161b of FIG. 2).

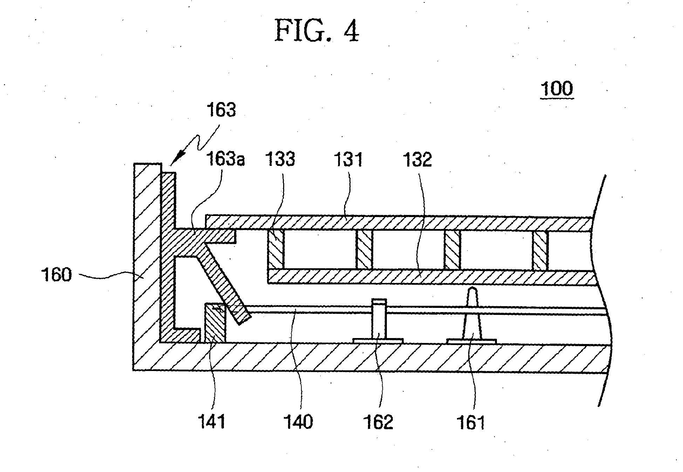

The lower mold 163 will now be described in detail with reference to FIGS. 1 through 4. FIG. 3 is a perspective view illustrating an exemplary embodiment of a lower mold according to the present invention and FIG. 4 is a cross-sectional view illustrating the backlight assembly of FIG. 1.

The lower mold 163 serves to support the diffusion plate assembly 130, cover a lamp socket 141 (See, FIG. 4), and reflect light emitted from the lamp 140.

The lower mold 163 includes the diffusion plate assembly support arm 163a, a lamp guide hole 163b and a fulcrum board 163c.

The diffusion plate assembly support arm 163a is disposed substantially horizontally and parallel to the fulcrum board 163c. The diffusion plate assembly 130 is placed on the diffusion plate assembly support arm 163a. A lower surface of an extended portion of the first plate 131 of the diffusion plate assembly 130 may contact the diffusion plate assembly support arm 163a as illustrated in FIG. 4. Here, since the second plate 132 is attached to the first plate 131 via the spacer 133, there is no need to separately form a support arm for placing the second plate 132 on the lower mold 163. In an exemplary embodiment, although the second plate 132 is supported by the spacer 133, it may be further supported by the supporter 161 to reduce or effectively prevent sagging of the second plate 132.

The lower mold 163 covers the lamp socket 141 connected to the lamp 140. The lamp guide hole 163b included in the lower mold 163 may be used to connect the lamp 140 to the lamp socket 141.

The fulcrum board 163c serves to maintain the balance of the lower mold 163.

In an exemplary embodiment, the lower mold 163 may be a non-integral type lower mold which is supported by the fulcrum board 163c and be disposed at opposing sides of the bottom chassis 160, such as at sides corresponding to ends of the lamps 140. Since the first plate 131 and the second plate 132 are supported by the spacer 133, a non-integral type lower mold can be used instead of an integral type lower mold formed along four edges of the bottom chassis 160. Advantageously, it is possible to more efficiently use a space defined by the bottom chassis 160.

As in the illustrated exemplary embodiments, the first plate 131 and the second plate 132 are separated and supported by the spacer 133, thereby effectively blocking heat. Furthermore, there is no need to separately form a supporter for supporting the first plate 131, thereby reducing manufacturing costs. In addition, since the lower mold 163, which is a non-integral type, is used, a space defined by the bottom chassis 160 can be efficiently used.

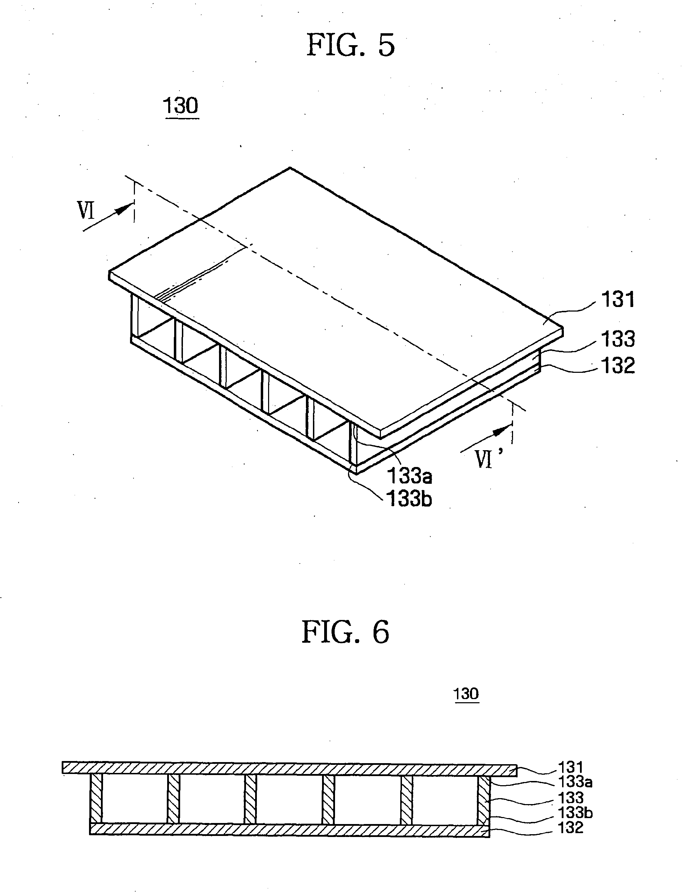

Hereinafter, an exemplary embodiment a diffusion plate assembly according to the present invention will be described in greater detail with reference to FIGS. 5 through 10B.

FIG. 5 is a perspective view illustrating an exemplary embodiment of a diffusion plate assembly 130 according to the present invention. Referring to FIG. 5, the diffusion plate assembly 130 includes a first plate 131 diffusing light, a second plate 132, which is disposed to face a surface of the first plate 131 and blocks heat transfer toward the first plate 131, and a spacer 133 interposed between the first plate 131 and the second plate 132.

The first plate 131 serves to enhance brightness uniformity by diffusing light emitted from a lamp (See, 140 of FIG. 1). That is, the brightness of light emitted from a lamp may vary according to the position of the lamp. Thus, light diffusion by the first plate 131 makes the brightness uniform.

In exemplary embodiments, in order to achieve brightness uniformity, the first plate 131 may be made by distributing a diffusion material in a transparent resin plate. In one exemplary embodiment, the transparent resin plate may be made of acryl or polycarbonate, and the diffusion material may be microparticles of crosslinkable polymethylmethacrylate, crosslinkable polystyrene, crosslinkable sodium polyacrylate, crosslinkable silicone, a crosslinkable acryl-styrene copolymer, calcium carbonate, barium sulfate, etc, but a material of the transparent resin plate and the diffusion material is not limited to these examples.

The first plate 131 may be a single-layered plate, but in alternative embodiments may be comprised of a plurality of sheets. In one exemplary embodiment, three sheets may be adhered together to form the first plate 131.

In an exemplary embodiment, the second plate 132 may be required for an outdoor liquid crystal display (e.g., a public information display ("PID")) requiring heat blocking. The second plate 132 is disposed to face a surface of the first plate 131 and to be separated from the first plate 131 by a predetermined distance to form an air layer between the first plate 131 and the second plate 132, thereby blocking heat transfer toward the first plate 131.

A planar area of the second plate 132 may be smaller than that of the first plate 131 so that the first plate 131 is easily placed on a diffusion plate assembly support arm (See, 163a of FIG. 4) of a lower mold (See, 163 of FIG. 4). In exemplary embodiments, the second plate 132 may be made of a transparent and rigid material, e.g., PMMA (PolyMethyl MethAcrylate) or polycarbonate, but the present invention is not limited thereto.

The spacer 133 is interposed between the first plate 131 and the second plate 132 and serves to separate and support the first plate 131 and the second plate 132. With respect to large-sized liquid crystal displays, the first plate 131 and the second plate 132 may have a relatively large planar area, and thus, the sagging of center portions of the first plate 131 and/or the second plate 132 may occur.

The use of the spacer 133 reduces or effectively prevents sagging of the first plate 131 and the second plate 132. Sagging of the first plate 131 may be reduced or effectively prevented by the spacer 133 without using a separate supporter. When the diffusion plate assembly 130 is installed in a backlight assembly, the spacer 133 interposed between the first plate 131 and the second plate 132 can relatively simply support the first plate 131 without perforating the second plate 132 and/or forming a first plate supporter.

A first end 133a of the spacer 133 may contact with a surface of the first plate 131 and a second end 133b of the spacer 133 may be contact or adhered to a surface of the second plate 132 facing the first plate 131. As used herein, the term "contact" is used to indicate physical contact between the spacer 133 and a surface of the first plate 131, and furthermore, is used to indicate heat- and pressure-induced adhesion between the spacer 133 and a surface of the first plate 131. Throughout the specification, the expression "heat- and pressure-induced adhesion" refers to adhesion induced by applied heat and pressure.

Hereinafter, adhesion of a spacer of the diffusion plate assembly (130 shown in FIG. 5) to a first plate and a second plate will be described with reference to FIG. 6. FIG. 6 is a cross-sectional view taken along line VI-VI' of FIG. 5.

Referring to FIG. 6, a spacer 133 can be adhered to a surface of a first plate 131 and a surface of a second plate 132 without using a separate adhesive. The spacer 133 may be made of a transparent resin which becomes adhesive in the presence of heat and pressure (e.g., a transparent silicone rubber for heat- and pressure-induced adhesion) and which does not have an adverse effect on visibility. In alternative embodiments, any adhesive transparent resin can be used as the spacer 133 as long as it becomes adhesive in the presence of heat and pressure.

Since a heat-and pressure-labile adhesive resin becomes adhesive due to external pressure and heat, when the spacer 133 is made of such a heat- and pressure-labile adhesive resin it can be adhered to surfaces of the first plate 131 and the second plate 132.

The diffusion plate assembly 130 can be integrally formed by interposing the spacer 133 between the first plate 131 and the second plate 132 and applying pressure to the first plate 131 and the second plate 132 in the opposite directions with heating using a heat- and pressure-application device (not shown). In alternative embodiments, the spacers 133 may be formed as a single unit with the first plate 131 and/or the second plate 132.

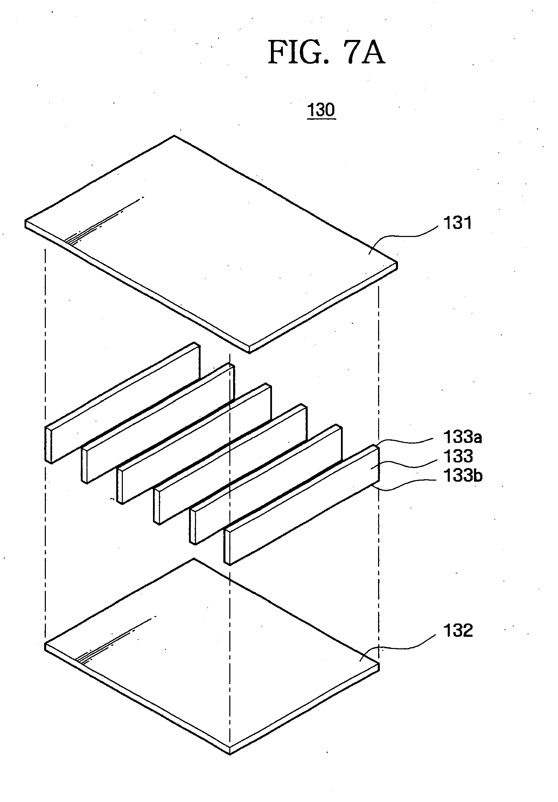

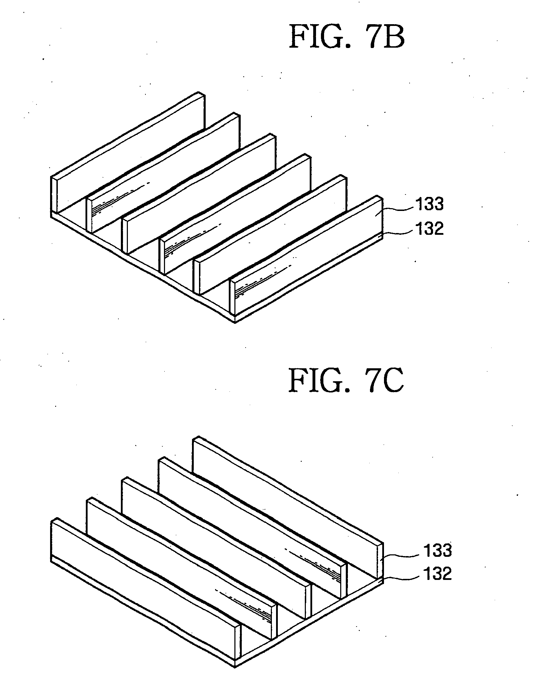

The shape and arrangement of the spacer (133 of FIG. 5) of the diffusion plate assembly (130 of FIG. 5) will now be described with reference to FIGS. 7A through 7D. FIG. 7A is an exploded perspective view of the diffusion plate assembly shown in FIG. 5, and FIGS. 7B through 7D are schematic views illustrating exemplary embodiments of different arrangements of spacers of the diffusion plate assembly shown in FIG. 5.

Referring to FIGS. 7A through 7D, the spacer 133 may be formed in a three-dimensional structure having a predetermined height and thickness, e.g., a rectangular parallelepiped bar, so that the spacer 133 supports the first plate 131 and a space or an air layer having a thickness suitable for heat blocking is formed between the first plate 131 and the second plate 132. However, the shape of the spacer 133 is not limited to the illustrated example, and many different modifications are possible.

The spacer 133 is formed to such a height that an air layer formed in a space defined by the first plate 131, the second plate 132, and the spacer 133 can efficiently perform heat blocking, taking into consideration a reduction in height due to adhesion caused by heat and pressure.

A predetermined number of spacers 133 are disposed in positions suitable for supporting the first plate 131 and the second plate 132. A distance between the spacers 133 in a longitudinal direction of the first plate 131 may be adjusted considering transmission loss according to the arrangement of the spacers 133. The spacers 133 may be arranged with a uniform distance therebetween so that pressure is uniformly applied to adhesion surfaces of the spacers 133 with the first plate 131 and the second plate 132.

In exemplary embodiments, the spacers 133 may be arranged in a stripe and/or mesh pattern. The spacers 133 may extend between edges of the first plate 131 and the second plate 132 to span a width and/or length of the first plate 131 and the second plate132.

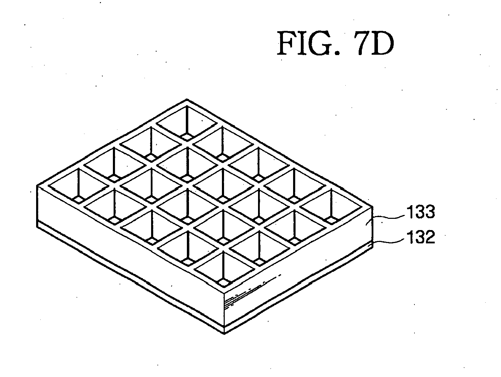

As illustrated in FIGS. 7A-7C, the spacers 133 may be arranged in a stripe pattern in a lengthwise (longitudinal) or widthwise (transverse) direction of the first plate 131 and the second plate 132, to reduce or effectively prevent sagging of the first plate 131 and the second plate 132 in the lengthwise or widthwise direction, respectively. As illustrated in FIG. 7D, the spacers 133 may be arranged in a mesh pattern in the lengthwise and widthwise directions of the first plate 131 and the second plate132, to reduce or effectively prevent sagging of the first plate 131 and the second plate 132 in the lengthwise and widthwise directions, respectively. In alternative exemplary embodiments, the spacers 133 may be arranged in a diagonal stripe and/or diagonal cross-hatched pattern so long as the spacers 133 reduce or effectively prevent sagging of the first plate 131 and the second plate132.

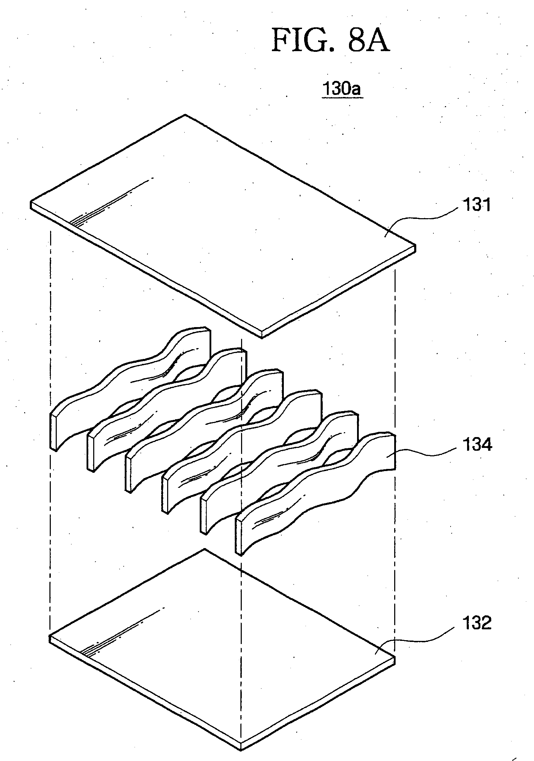

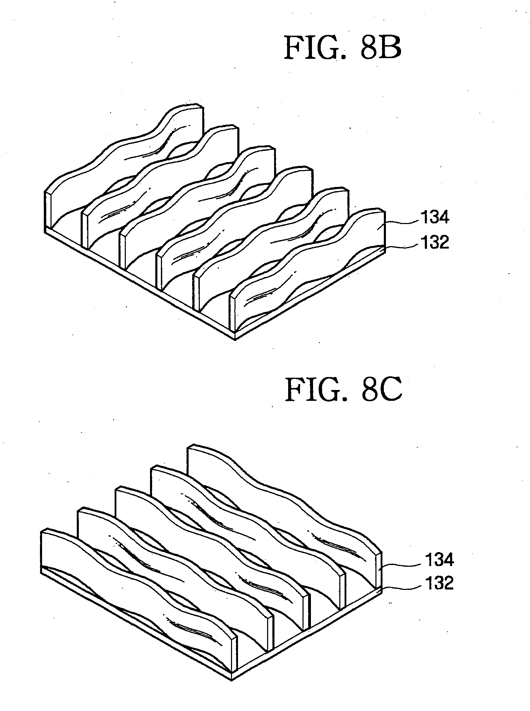

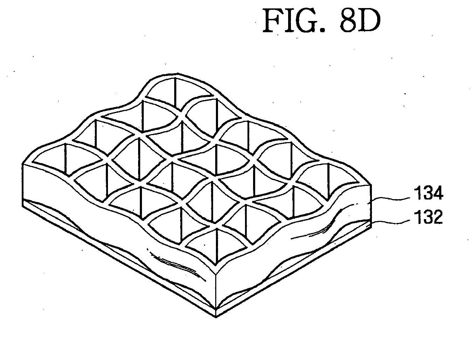

Hereinafter, a diffusion plate assembly including a modified spacer (133 of FIG. 5) of the diffusion plate assembly (130 of FIG. 5) will be described with reference to FIGS. 8A through 8D. FIG. 8A is an exploded perspective view illustrating a diffusion plate assembly including another exemplary embodiment of the spacers (133 of FIG. 5), and FIGS. 8B through 8D are schematic views illustrating exemplary embodiments of different arrangements of the spacers of FIG. 8A.

Referring to FIGS. 8A through 8D, diffusion plate assembly 130a has substantially the same structure as the diffusion plate assembly (130 of FIG. 5) except that a spacer 134 has an undulated column structure.

The spacer 134 is formed to a predetermined height taking into consideration a reduction in height due to adhesion caused by heat and pressure, like the spacer 133 described with reference to FIGS. 7A-7D.

A predetermined number of spacers 134 may be arranged at a predetermined interval. In exemplary embodiments, the spacers 134 may be arranged in a stripe or mesh pattern.

As illustrated in FIGS. 8C and 8B, the spacers 134 may be arranged in the lengthwise and/or widthwise direction(s), respectively, of a first plate 131 and a second plate 132 to reduce or effectively prevent the first plate 131 and the second plate 132 from sagging in the lengthwise and/or widthwise direction(s). As illustrated in FIG. 8D, the spacers 134 may be arranged in a mesh pattern in the lengthwise and widthwise directions of the first plate 131 and the second plate 132, to reduce or effectively prevent sagging of the first plate 131 and the second plate132 in the lengthwise and widthwise directions, respectively. In alternative exemplary embodiments, the spacers 134 may be arranged in a diagonal stripe and/or diagonal cross-hatched pattern so long as the spacers 134 reduce or effectively prevent sagging of the first plate 131 and the second plate132.

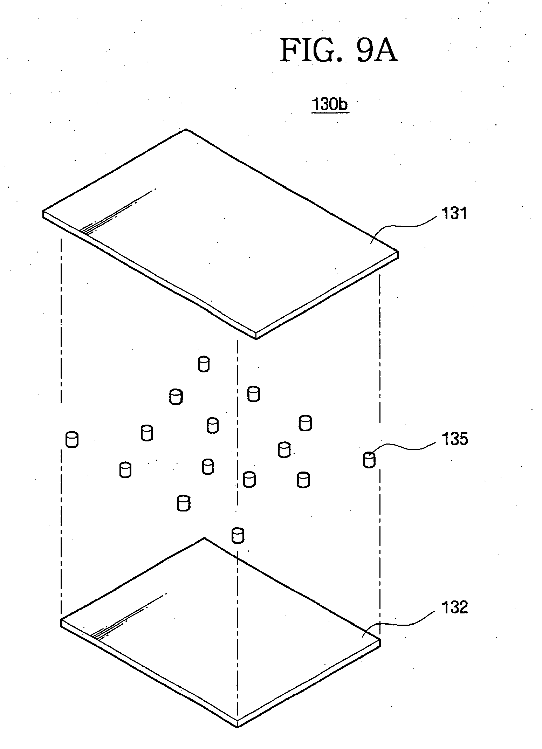

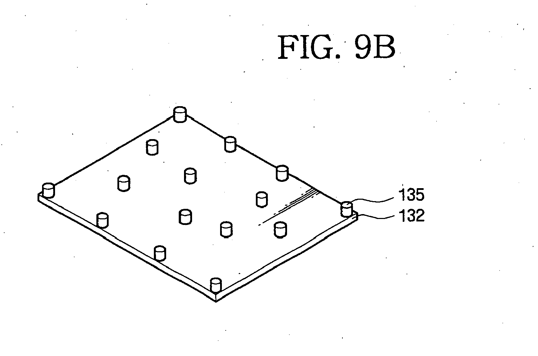

Hereinafter, a diffusion plate assembly including another modified spacer (133 of FIG. 5) of the diffusion plate assembly (130 of FIG. 5) will be described with reference to FIGS. 9A and 9B. FIG. 9A is an exploded perspective view illustrating a diffusion plate assembly including another exemplary embodiment of the spacers 133 of the diffusion plate assembly shown in FIG. 5, and FIG. 9B is a schematic view illustrating an exemplary embodiment of an arrangement of the spacers of FIG. 9A. Referring to FIGS. 9A and 9B, diffusion plate assembly 130b has substantially the same structure as the diffusion plate assembly (See, 130 of FIG. 5) except that a spacer 135 is a cylindrical structure. The spacers 135 may be considered as discretely arranged across surfaces of the first plate 131 and the second platel32.

The spacer 135 is formed to a predetermined height taking into consideration a reduction in height due to adhesion caused by heat and pressure, like the spacers 133 of FIGS. 5 and 7A. A contact area of the spacer 135 with a first plate 131 or a second plate 132 is adjusted so that the spacer 135 sufficiently supports the first plate 131 or the second plate 132 and does not reduce light transmittance. A predetermined number of spacers 135 may be arranged in a dot-like pattern when viewed on a plane. The spacers 135 can also be arranged in a non-uniform fashion provided that they can support the first plate 131 and the second plate 132. However, the spacers may be arranged at a substantially uniform interval to keep light transmittance and supporting pressure relatively uniform.

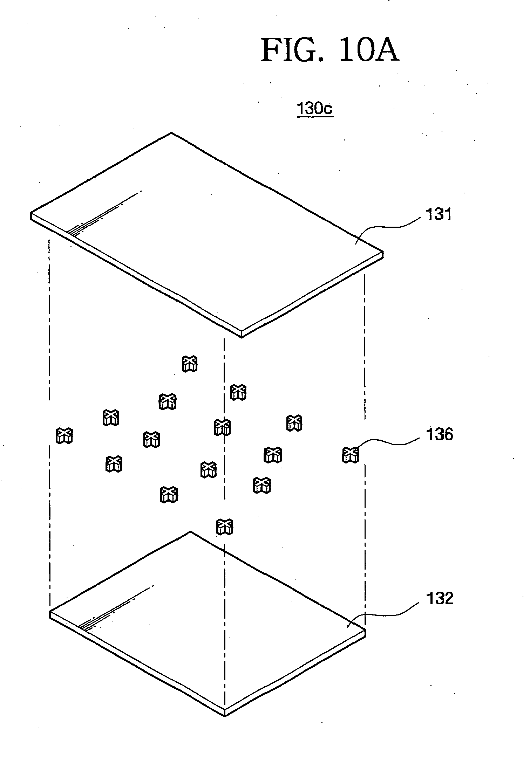

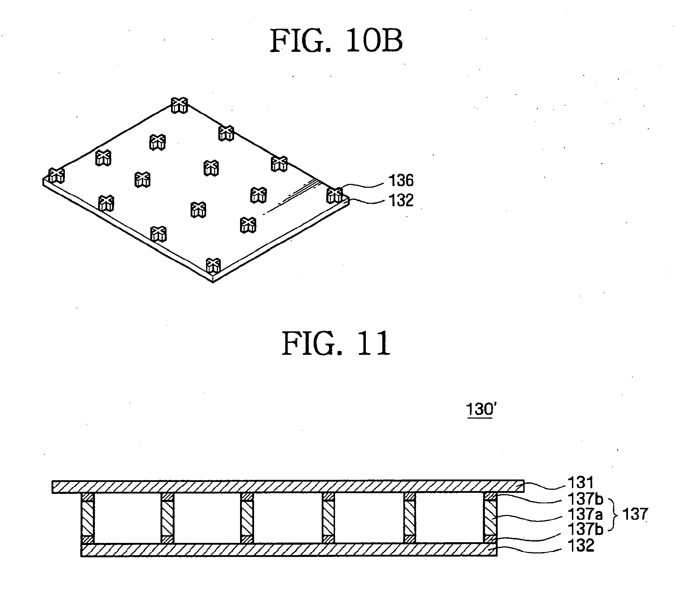

Hereinafter, a diffusion plate assembly including a modified spacer (133 of FIG. 5) will be described with reference to FIGS. 10A and 10B. FIG. 10A is an exploded perspective view illustrating a diffusion plate assembly including another exemplary of the spacers of the diffusion plate assembly shown in FIG. 5 and FIG. 10B is a schematic view illustrating an exemplary embodiment of an arrangement of spacers of FIG. 10A.

Referring to FIGS. 10A and 10B, diffusion plate assembly 130c has substantially the same structure as the diffusion plate assembly (See, 130 of FIG. 5) except that a spacer 136 has a cross column structure.

The spacer 136 is formed to a predetermined height considering a distance between a first plate 131 and a second plate 132, supporting pressure and light transmittance, as considered for the spacers of FIGS. 5 and 7A.

A predetermined number of spacers 136 may be arranged in a dot-like pattern, like the spacers 135 of FIGS. 9A and 9B. The spacers 136 may be arranged in a non-uniform fashion provided that they can support the first plate 131 and the second plate 132. In an alternative embodiment, the spacers 136 may be arranged having a substantially uniform distance therebetween to uniformly maintain light transmittance and supporting pressure.

As in the illustrated embodiments of FIGS. 5-10, the spacer, when heated and pressurized, is adhered to the first plate 131 used for light diffusion and the second plate 132 used for blocking heat transfer toward the first plate 131 to separate and support the first plate 131 and the second plate 132. Advantageously, it is possible to reduce or effectively prevent the sagging of the first plate 131 and the second plate 132 and to achieve light diffusion and heat blocking effects.

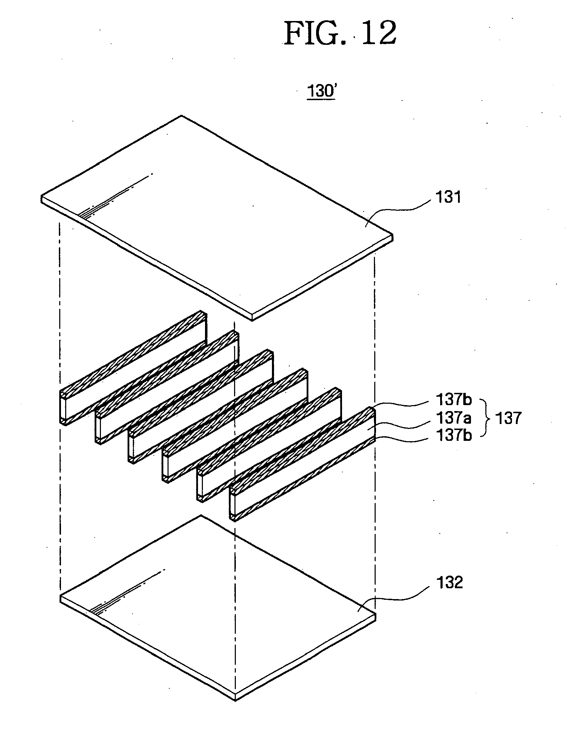

Hereinafter, another exemplary embodiment of a diffusion plate assembly according to the present invention will be described with reference to FIGS. 11 and 12. FIG. 11 is a cross-sectional view illustrating another exemplary embodiment of a diffusion plate assembly according to the present invention, and FIG. 12 is an exploded perspective view illustrating the diffusion plate assembly shown in FIG. 11. For brevity, components each having the same function for describing the previous embodiment are respectively identified by the same reference numerals, and their repetitive description will be omitted. The diffusion plate assembly 130' of FIGS. 11 and 12 has substantially the same structure as the diffusion plate assemblies (See, 130, 130a, 130b, and 130c of FIGS. 7A, 8A, 9A, and 10A, respectively) of the previous embodiments except for the differences described below. The diffusion plate assembly 130' of FIGS. 11 and 12 include a spacer 137 interposed between a first plate 131 and a second plate 132 by means of an adhering layer 137b.

Referring to FIGS. 11 and 12 illustrating the diffusion plate assembly 130', the spacer 137 is comprised of a spacer body 137a and the adhering layer 137b.

In an alternative exemplary embodiment, the adhering layer 137b may be formed on only an end of the spacer body 137a adjacent to the second plate 132, unlike the structure illustrated in FIGS. 11 and 12. An end of the spacer 137 contacts with a surface of the first plate 131 and the other end of the spacer 137 is adhered to a surface of the second plate 132 facing the first plate 131. As used herein, the term "contact" is used to indicate physical contact between the spacer 137 and a surface of the first plate 131, and furthermore, to indicate adhesion of the spacer 137 to a surface of the first plate 131 via the adhering layer 137b.

In exemplary embodiments, the spacer body 137a may be made of a material (e.g., polycarbonate or PMMA) which is rigid enough to separate and support the first plate 131 and the second plate 132 and is transparent enough to minimize transmission loss. In an exemplary embodiment, a material of the spacer body 137a may be the same as that for the second plate 132.

The spacer body 137a may be adhered to a surface of the first plate 131 and/or a surface of the second plate 132 via the adhering layer 137b. The spacer body 137a may have a three-dimensional structure having a flat surface contacting with the adhering layer 137b to separate and support the first plate 131 and the second plate 132.

The height of the spacer body 137a is determined considering the applying thickness of the adhering layer 137b so that an overall height (or thickness) of the spacer 137 is the substantially same as that of the spacers of the diffusion plate assemblies 130, 130a, 130b, and 130c of FIGS. 7A, 8A, 9A, and 10A.

The adhering layer 137b is formed on a substantially flat surface of the spacer body 137a. In an exemplary embodiment, the adhering layer 137b may be made of a transparent adhesive or a transparent double-coated tape to prevent a reduction in visibility. The transparent adhesive and a transparent double-coated tape can maintain transparency even after curing as well as during applying or adhesion, thereby reducing or effectively preventing a reduction in visibility.

The thickness of the adhering layer 137b is determined considering the height of the spacer body 137a so that the height of the spacer 137 is substantially the same as that of the spacers of the diffusion plate assemblies 130, 130a, 130b, and 130c of FIGS. 7A, 8A, 9A, and 10A.

In an exemplary embodiment, after the spacer 137 including the adhering layer 137b is adhered to the second plate 132, the first plate 131 is placed on the spacer 137. When pressure is applied to surfaces of the first plate 131 and the second plate 132, the first plate 131 and the spacer 137 are adhered to each other. The shape and arrangement of the spacer 137 are as described above.

As in the illustrated embodiment, the spacer 137 includes the adhering layer 137b, and thus, it can be easily adhered to the first plate 131 and the second plate 132. The spacer 137 can separate and support the first plate 131 and the second plate 132, reduce or effectively prevent sagging of the first plate 131 and the second plate 132, and achieve light diffusion and heat blocking effects.

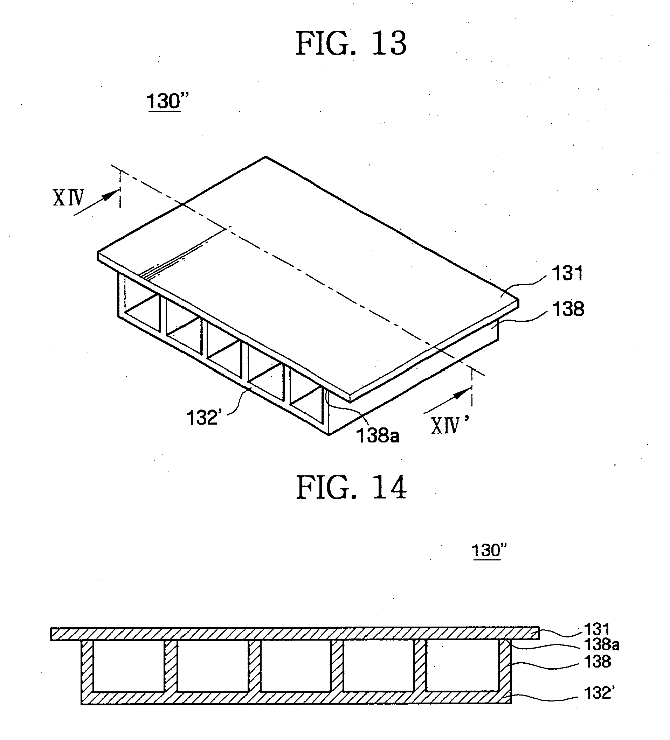

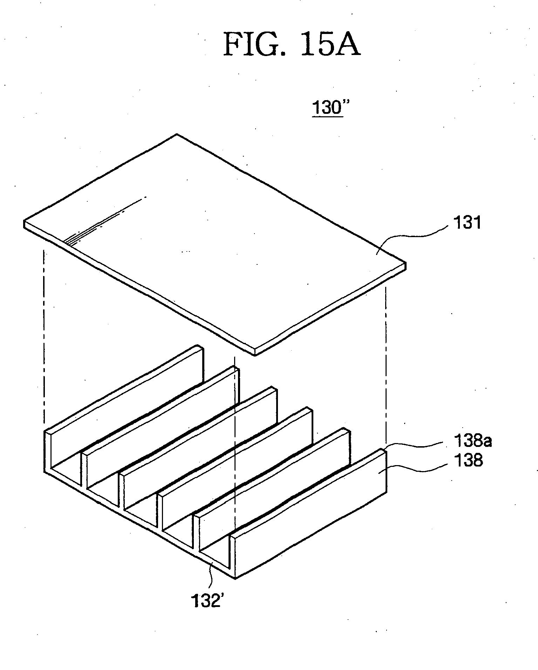

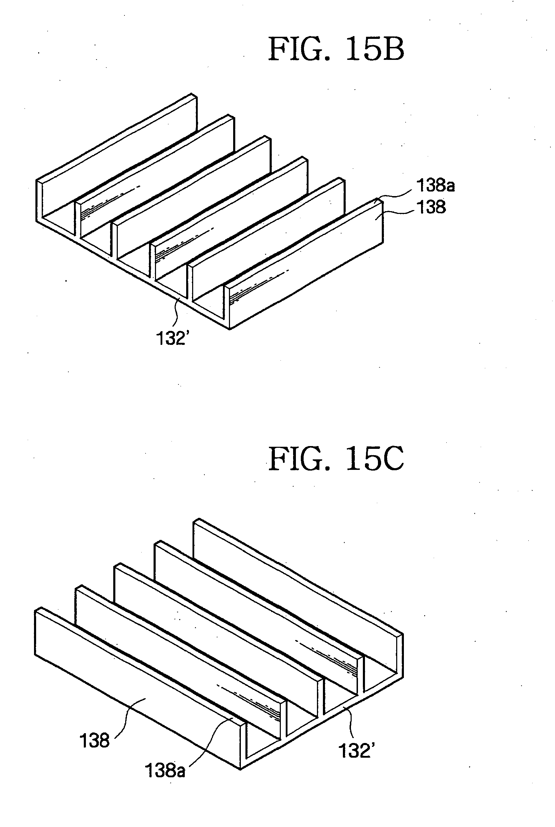

Hereinafter, another exemplary embodiment of a diffusion plate assembly according to the present invention will be described with reference to FIGS. 13 through 15D. FIG. 13 is a perspective view illustrating another exemplary embodiment of a diffusion plate assembly according to the present invention, FIG. 14 is a cross-sectional view taken along line XIV-XIV' of FIG. 13, FIG. 15A is an exploded perspective view illustrating the diffusion plate assembly shown in FIG. 13, and FIGS. 15B through 15D are schematic views illustrating exemplary embodiments of different arrangements of spacers of FIG. 13. For brevity, components each having the same function for describing the previous embodiments are respectively identified by the same reference numerals, and their repetitive description will be omitted. The diffusion plate assembly 130" of FIGS. 13-15D differs from the diffusion plate assembly of FIGS. 5-10 in that a second plate 132' is formed integrally with a spacer 138.

Referring to FIGS. 13 through 15D illustrating the diffusion plate assembly 130", the spacer 138 is formed integrally with the second plate 132'. As used herein, the term "integrally" is used to indicate formed to be a single unit or piece rather than combining separate element. An end 138a of the spacer 138 contacts with a surface of a first plate 131. As used herein, the term "contact" is used to indicate physical contact between the spacer 138 and a surface of the first plate 131, and furthermore, to indicate heat-and pressure-induced adhesion between the spacer 138 and a surface of the first plate 131.

In an exemplary embodiment, the second plate 132' can be formed integrally with the spacer 138, such as in a single die. The second plate 132' and the spacer 138 can be integrally formed so that the spacer 138 vertically protrudes from the second plate 132', such as being substantially perpendicular to the surface of the second plate 132'. In an alternative exemplary embodiment, the spacer 138 and the first plate 131 can be integrally formed in a single die. In this case, the spacer 138 is adhered to the second plate 132' by heat and pressure or an adhesive.

The spacer 138 is formed to a predetermined height to separate the first plate 131 and the second plate 132' so that an air layer formed in a space between the first plate 131 and the second plate 132' can efficiently perform heat blocking.

In an exemplary embodiment, the spacer 138 may be made of the same material as the second plate 132' so that the spacer 138 and the second plate 132' can be formed in a single die.

The spacer 138 supportingly contacts with the first plate 131. The spacer 138 may also be supportingly adhered to the first plate 131 by heat and pressure.

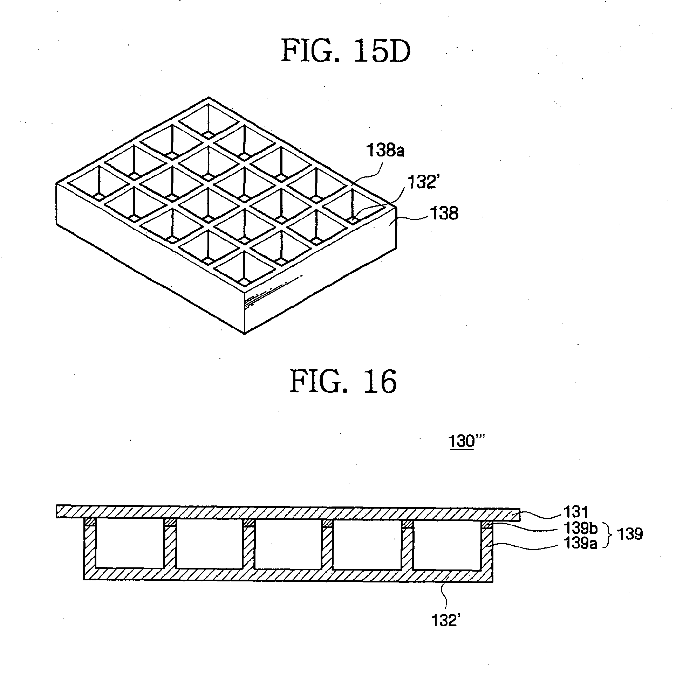

In exemplary embodiments, the spacer 138 may have a rectangular parallelepiped bar structure. A plurality of spacers may be arranged in a stripe (See, FIG. 15A-15C) and/or mesh pattern (See, FIG. 15D) on the second plate 132'. In alternative exemplary embodiments, the spacers 133 may be arranged in a diagonal stripe and/or diagonal cross-hatched pattern.

The shape and arrangement of the spacer 138 are not limited to the illustrated exemplary embodiments, and may be the same as those of the modified embodiments of the spacers of FIGS. 7A, 8A, 9A, and 10A The spacer 138 may also include an adhering layer to be adhered to the first plate 131 as in the spacer of FIGS. 11 and 12. In addition, many different modifications are possible and considered within the scope of the present invention.

As in the illustrated exemplary embodiment,, the spacer 138 and the second plate 132' are integrally formed, thereby simplifying a manufacturing process. Furthermore, it is possible to prevent sagging of the first plate 131 and to achieve light diffusion and heat blocking effects.

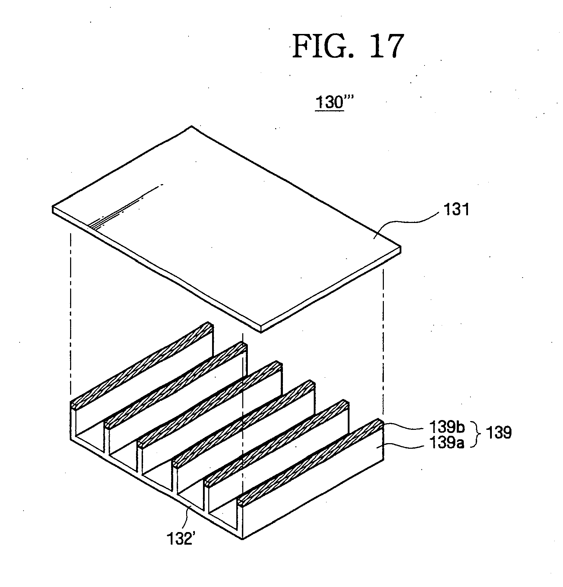

Hereinafter, another exemplary embodiment of a diffusion plate assembly according to the present invention will be described with reference to FIGS. 16 and 17. FIG. 16 is a cross-sectional view illustrating another exemplary embodiment of a diffusion plate assembly according to the present invention and FIG. 17 is an exploded perspective view illustrating the diffusion plate assembly shown in FIG. 16. For brevity, components each having the same function for describing the previous embodiments are respectively identified by the same reference numerals, and their repetitive description will be omitted. The diffusion plate assembly 130"' of FIGS. 16 and 17 differs from that of FIGS. 5-10 in that a spacer 139 is adhered to a surface of a first plate 131 via an adhering layer 139b. The diffusion plate assembly 130"'of FIGS. 16 and 17 is the same as that of FIGS. 14-15D in that a second plate 132' is formed integrally with the spacer, such as in a single die.

Referring to FIGS. 16 and 17 illustrating the diffusion plate assembly 130"', the spacer 139 contacts with a surface of the first plate 131. As used herein, the term "contact" is used to indicate physical contact between the spacer 139 and a surface of the first plate 131, and furthermore, to indicate adhesion of the spacer 139 to a surface of the first plate 131 via the adhering layer 139b.

The spacer 139 is comprised of a spacer body 139a and the adhering layer 139b. In an exemplary embodiment, the spacer body 139a may be made of the same material as the second plate 132' so that the spacer body 139a is formed integrally with the second plate 132'. As used herein, the term "integrally" is used to indicate formed to be a single unit or piece rather than combining separate elements.

The spacer body 139a is adhered to a surface of the first plate 131 via the adhering layer 139b. The spacer body 139a may have a three-dimensional structure having a flat surface contacting with the adhering layer 139b to separate and support the first plate 131 and the second plate 132'.

The height of the spacer body 139a is determined considering the applying thickness of the adhering layer 139b so that an overall height (or thickness in a direction perpendicular to the first plate 131) of the spacer 139 is the substantially same as that of the spacers according to the previous exemplary embodiments of the present invention.

The adhering layer 139b is formed on a distal end of the spacer body 139a from the second plate 132'. In exemplary embodiments, the adhering layer 139b may be made of a transparent adhesive or a transparent double-coated tape to effectively prevent a reduction in visibility. A transparent adhesive and a transparent double-coated tape can maintain transparency even after curing as well as during applying or adhesion, thereby preventing a reduction in visibility.

The shape and arrangement of the spacer 139 may be the same as those of a spacers of FIGS. 7A, 8A, 9A, and 10A. In addition, many different modifications are possible.

As in the illustrated exemplary embodiment, the spacer 139 is easily adhered to the first plate 131 and is formed integrally with the second plate 132'. Therefore, it is possible to prevent the sagging of the first plate 131 and to achieve light diffusion and heat blocking effects.

The illustrated exemplary embodiments of diffusion plate assemblies and backlight assemblies according to the present invention provide one or more of the following advantages.

In an exemplary embodiment, a first plate used for light diffusion is supported by a spacer, and thus, there is no need to separately form a first plate supporter, thereby reducing manufacturing costs.

In an exemplary embodiment, a spacer uniformly maintains a distance between a first plate and a second plate, and thus, an air layer formed in a space defined by the first plate, the second plate, and the spacer can efficiently perform heat blocking.

In an exemplary embodiment, the use of a non-integral lower mold in a backlight assembly enables a space defined by a bottom chassis to be used efficiently.

While the present invention has been particularly shown and described with reference to exemplary embodiments thereof, it will be understood by those of ordinary skill in the art that various changes in form and details may be made therein without departing from the spirit and scope of the present invention as defined by the following claims. Therefore, it is to be understood that the above-described embodiments have been provided only in a descriptive sense and will not be construed as placing any limitation on the scope of the invention.

## Claims

1. A diffusion plate assembly comprising:
a first plate diffusing light;
a second plate, disposed to face a surface of the first plate and blocking heat transfer toward the first plate; and
a spacer interposed between the first plate and the second plate and separating the first plate and the second plate.

2. The diffusion plate assembly of claim 1, wherein a first end of the spacer contacts a surface of the first plate and a second end of the spacer is adhered to a surface of the second plate facing the first plate.

3. The diffusion plate assembly of claim 2, wherein the spacer is made of a transparent, heat- and pressure-labile adhesive resin.

4. The diffusion plate assembly of claim 3, wherein the spacer has a rectangular parallelepiped bar structure or an undulated column structure.

5. The diffusion plate assembly of claim 4, wherein a plurality of spacers is arranged in a stripe pattern and the spacers are separated by a predetermined distance.

6. The diffusion plate assembly of claim 3, wherein the spacer has a cylindrical structure or a cross column structure.

7. The diffusion plate assembly of claim 6, wherein a plurality of spacers is arranged in a dot-like pattern and the spacers are separated by a predetermined distance.

8. The diffusion plate assembly of claim 2, wherein the spacer is adhered to the surface of the second plate facing the first plate via an adhering layer.

9. The diffusion plate assembly of claim 1, wherein the spacer and the second plate are formed as a single unit and a distal end of the spacer contacts with a surface of the first plate.

10. The diffusion plate assembly of claim 9, wherein the spacer is adhered to the surface of the first plate by heat and pressure.

11. The diffusion plate assembly of claim 9, wherein the spacer is adhered to the surface of the first plate via an adhering layer.

12. A backlight assembly comprising:
a lower mold comprising a diffusion plate assembly support arm;
a diffusion plate assembly disposed on the diffusion plate assembly support arm and comprising:
a first plate diffusing light;
a second plate disposed to face a lower surface of the first plate and blocking heat transfer toward the first plate; and
a spacer interposed between the first plate and the second plate and separating the first plate and the second plate;
a lamp disposed below the diffusion plate assembly; and
a bottom chassis receiving the lower mold, the diffusion plate assembly and the lamp.

13. The backlight assembly of claim 12, further comprising a supporter secured to the bottom chassis and supporting the second plate.

14. The backlight assembly of claim 13, wherein the lower mold is a non-integral type lower mold which is disposed at opposing sides of the bottom chassis corresponding to ends of the lamp.

15. The backlight assembly of claim 14, wherein a lower surface of the first plate contacts with the diffusion plate assembly support arm.

16. The backlight assembly of claim 14, wherein a planar area of the first plate is larger than a planar area of the second plate and a lower surface of an extended portion of the first plate contacts with an upper surface the diffusion plate assembly support arm

17. The backlight assembly of claim 15, wherein a first end of the spacer contacts a lower surface of the first plate and a second end of the spacer is adhered to an upper surface of the second plate facing the first plate.

18. The backlight assembly of claim 17, wherein the spacer is made of a transparent, heat- and pressure-labile adhesive resin.

19. The backlight assembly of claim 17, wherein the spacer is adhered to the surface of the second plate facing the first plate via an adhering layer.

20. The backlight assembly of claim 15, wherein the spacer and the second plate are formed as a single piece and an end of the spacer contacts with a lower surface of the first plate.
